# EUROPEAN PATENT APPLICATION

(11) **EP 3 883 030 A1**
(43) Date of publication of application: **22.09.2021**
(21) Application number: 21159890.9
(22) Date of filing: 01.03.2021
(51) Int. Cl.: H01M 8/1253, H01M 8/126, C25B 1/042, C25B 13/02, C25B 13/07

(54) **ELECTROCHEMICAL CELL, ELECTROCHEMICAL CELL STACK, AND ELECTROLYTE FOR ELECTROCHEMICAL CELL**

(30) Priority: 18.03.2020 JP 2020048003
(71) Applicant: Toshiba Energy Systems & Solutions Corporation, Saiwai-ku Kawasaki-shi Kanagawa 2120013 (JP)
(72) Inventor: Osada, Norikazu, Kanagawa, 212-0013 (JP); Kameda, Tsuneji, Kanagawa, 212-0013 (JP)
(74) Representative: Hoffmann Eitle

(57) **Abstract**

An electrochemical cell includes an electrolyte arranged between a hydrogen electrode and an oxygen electrode, wherein the electrolyte contains a ceria-based material having a fluorite crystal structure and a stabilized zirconia-based material.

## Description

### FIELD

Embodiments of the present invention relate to an electrochemical cell, an electrochemical cell stack, and an electrolyte for an electrochemical cell.

### BACKGROUND

A solid oxide electrochemical cell (SOC: Solid Oxide Cell) has a high operating temperature (600°C to 1000°C), and thus can obtain a sufficient reaction rate without using an expensive noble metal catalyst. Therefore, when operating as a solid oxide fuel cell (SOFC), the solid oxide electrochemical cell has the highest power generation efficiency and generates less CO₂ as compared to other types of fuel cells. For these reasons, the solid oxide electrochemical cell is expected as a clean next-generation power generation system. Further, when operating as a high-temperature steam electrolysis cell (SOEC: Solid Oxide Electrolysis Cell), the solid oxide electrochemical cell can produce hydrogen with a low electrolysis voltage in principle due to its high operating temperature, and thus is also expected as a high-efficiency hydrogen production device. Furthermore, studies are also being made on utilization as a power storage system that uses the solid oxide electrochemical cell and the high-temperature steam electrolysis cell.

The solid oxide electrochemical cell includes an electrolyte, a hydrogen electrode provided on one side of the electrolyte, and an oxygen electrode provided on the other side of the electrolyte. The hydrogen electrode serves as a hydrogen-consuming electrode in a solid oxide fuel cell and as a hydrogen-generating electrode in a high-temperature steam electrolysis cell. The oxygen electrode serves as an oxygen-consuming electrode in the solid oxide fuel cell and as an oxygen-generating electrode in the high-temperature steam electrolysis cell. As the electrolyte, a stabilized zirconia-based electrolyte having a high conductivity or a lanthanum-gallium-based oxide (a LaGaO₃-based compound) has been generally used.

The characteristics of the solid oxide electrochemical cell are determined by the activity of an electrode catalyst and ohmic loss that depends on the ohmic resistance between terminals, and most of the ohmic loss is due to the ionic conductivity of the electrolyte. Further, when the ionic conductivity of the electrolyte is increased, the activity of the electrode catalyst is improved, so that the characteristics of the cell are improved.

However, a conventional solid oxide electrochemical cell mainly uses a ceramic material, and uses a stabilized zirconia-based material or a LaGaO₃-based material as an electrolyte. Therefore, because of an oxygen potential difference between an oxygen-electrode side and a hydrogen-electrode side, reduction of an oxide as an electrolyte material proceeds to change the crystal structure of the oxide, causing a decrease in the ionic conductivity of the electrolyte. This decrease in the ionic conductivity causes deterioration of cell performance.

### BRIEF DESCRIPTION OF THE DRAWINGS

FIG. 1 is a cross-sectional view illustrating a solid oxide electrochemical cell according to a first embodiment; and
FIG. 2 is a cross-sectional view illustrating a solid oxide electrochemical cell according to a second embodiment.

### DETAILED DESCRIPTION

An electrochemical cell according to the present embodiments includes an electrolyte arranged between a hydrogen electrode and an oxygen electrode. The electrolyte contains a ceria-based material having a fluorite crystal structure and a stabilized zirconia-based material.

Embodiments of the present invention will be explained below with reference to the accompanying drawings. The present invention is not limited to the embodiments. Further, the schematic drawings referred to in the following descriptions are drawings illustrating positional relationships of respective constituent elements, and the ratios and the like among the respective constituent elements do not necessarily match those of actual products. In the drawings referred to in the respective embodiments, same parts or parts having identical functions are denoted by like or similar reference characters and redundant explanations thereof are omitted.

### (First embodiment)

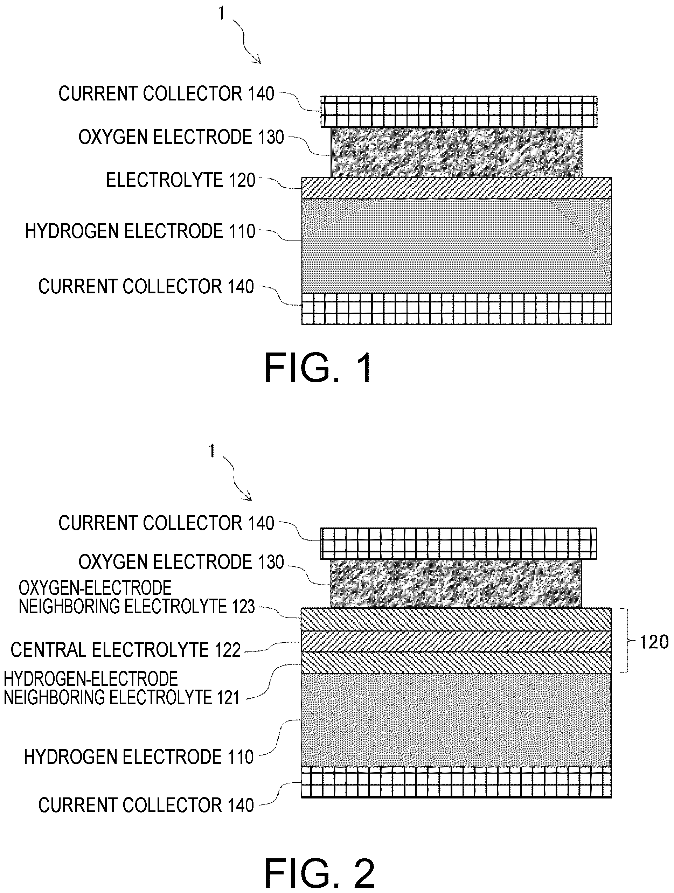

FIG. 1 is a cross-sectional view illustrating a solid oxide electrochemical cell 1 according to a first embodiment as an example of an electrochemical cell. The solid oxide electrochemical cell 1 illustrated in FIG. 1 can be used as a solid oxide fuel cell (SOFC) or a high-temperature steam electrolysis cell (SOEC). A plurality of the solid oxide electrochemical cells 1 can form a solid oxide electrochemical cell stack by being stacked.

The solid oxide electrochemical cell 1 according to the first embodiment is a hydrogen-electrode-supported solid oxide electrochemical cell that is a planar type. As illustrated in FIG. 1, the solid oxide electrochemical cell 1 includes a hydrogen electrode 110, an oxygen electrode 130, and an electrolyte 120 between the hydrogen electrode 110 and the oxygen electrode 130. That is, the solid oxide electrochemical cell 1 has a stacked structure in which the hydrogen electrode 110, the electrolyte 120, and the oxygen electrode 130 are stacked in turn. Current collectors 140 are provided on a side of the hydrogen electrode 110 opposite to the electrolyte 120 and on a side of the oxygen electrode 130 opposite to the electrolyte 120, respectively. A reaction prevention layer may be provided between the electrolyte 120 and the oxygen electrode 130, if necessary. Each component of the solid oxide electrochemical cell 1 is described in more detail below.

### (Hydrogen electrode 110)

The hydrogen electrode 110 is an electrode having a porous structure. The hydrogen electrode 110 serves as a hydrogen-consuming electrode when the solid oxide electrochemical cell 1 is used as a solid oxide fuel cell, and serves as a hydrogen-generating electrode when the solid oxide electrochemical cell 1 is used as a high-temperature steam electrolysis cell. The hydrogen electrode 110 may be configured by a hydrogen-electrode support located on the side opposite to the electrolyte 120 and a hydrogen-electrode active layer located on the electrolyte 120 side.

For example, a sintered body containing metal particles and a metal oxide can be used as the hydrogen electrode 110. As the metal contained as particles or contained in the form of a solid solution in the oxide in this sintered body, at least one type of metal selected from a group consisting of nickel, cobalt, iron, and copper, or an alloy containing these metals can be suitably used, for example. Examples of the metal oxide that can be suitably used include stabilized zirconia in which at least one type of stabilizer selected from a group consisting of Y₂O₃, Sc₂O₃, Yb₂O₃, Gd₂O₃, CaO, MgO, and CeO₂ is contained in the form of a solid solution, and doped ceria in which at least one type of oxide selected from a group consisting of Sm₂O₃, Gd₂O₃, and Y₂O₃ and CeO₂ are contained in the form of a solid solution.

### (Electrolyte 120)

The electrolyte 120 conducts oxygen ions O²⁻ as working ions between the hydrogen electrode 110 and the oxygen electrode 130.

The electrolyte 120 contains a ceria-based material having a fluorite crystal structure and a stabilized zirconia-based material.

For example, doped ceria can be suitably used as the ceria-based material, in which at least one type of oxide selected from a group consisting of Sm₂O₃, Gd₂O₃, and Y₂O₃ and CeO₂ are contained in the form of a solid solution.

For example, stabilized zirconia can be suitably used as the stabilized zirconia-based material, in which at least one type of stabilizer selected from a group consisting of Y₂O₃, Sc₂O₃, Yb₂O₃, Gd₂O₃, CaO, MgO, and CeO₂ is contained in the form of a solid solution.

The electrolyte 120 may further contain a perovskite oxide represented by Ln₁₋ₓAₓBO_{3-δ}. Ln in the perovskite oxide is, for example, a rare-earth element such as La. A is Sr, Ca, or Ba, for example. B is, for example, at least one type of metal selected from Ga, Cr, Mn, Co, Fe, and Ni. Further, x and δ in the perovskite oxide satisfy 0≤x≤1 and 0≤δ≤1.

### (Oxygen electrode 130)

The oxygen electrode 130 is an electrode having a porous structure. The oxygen electrode 130 serves as an oxygen-consuming electrode when the solid oxide electrochemical cell 1 is used as a solid oxide fuel cell, and serves as an oxygen-generating electrode when the solid oxide electrochemical cell 1 is used as a high-temperature steam electrolysis cell.

The oxygen electrode 130 is formed by a sintered body containing a perovskite oxide. The perovskite oxide is mainly represented by Ln₁₋ₓAₓB_{1-y}C_{y}O_{3-δ}. Ln is, for example, a rare-earth element such as La. A is Sr, Ca, or Ba, for example. Each of B and C is Cr, Mn, Co, Fe, Ni, or the like. Further, x, y, and δ in the perovskite oxide satisfy 0≤x≤1, 0≤y≤1, and 0≤δ≤1.

The oxygen electrode 130 may further contain doped ceria in which at least one type of oxide selected from a group consisting of Sm₂O₃, Gd₂O₃, and Y₂O₃, is doped into CeO₂, in addition to the perovskite oxide.

According to the first embodiment, the electrolyte 120 contains both a ceria-based material having a fluorite crystal structure and a stabilized zirconia-based material, thereby being able to prevent a decrease in the conductivity of ions O²⁻, as compared with a case where the electrolyte 120 contains the stabilized zirconia-based material only. By preventing a decrease in the ionic conductivity, it is possible to allow the solid oxide electrochemical cell 1 to maintain the desired characteristics.

Further, according to the first embodiment, doped ceria in which at least one type of oxide selected from Gd, Sm, and Y is doped is applied as the ceria-based material, and stabilized zirconia stabilized with at least one type of oxide selected from Y and Sc is applied as the zirconia-based material, thereby being able to effectively prevent a decrease in the ionic conductivity.

Furthermore, according to the first embodiment, the oxygen electrode 130 contains an ABO₃-type perovskite oxide, an element constituting the A site in the perovskite oxide is at least one type of element selected from La, Ba, Sr, and Ca, and an element constituting the B site is at least one type of element selected from Mn, Co, Fe, and Ni, thereby being able to effectively prevent a decrease in the ionic conductivity.

In addition, according to the first embodiment, the hydrogen electrode 110 contains metal particles and a metal oxide, and the metal oxide contains one or more types of metals selected from a group consisting of nickel, cobalt, iron, and copper, thereby being able to effectively prevent a decrease in the ionic conductivity.

### (Second embodiment)

FIG. 2 is a cross-sectional view illustrating the solid oxide electrochemical cell 1 according to a second embodiment. As illustrated in FIG. 2, the solid oxide electrochemical cell 1 according to the second embodiment is different from the solid oxide electrochemical cell 1 according to the first embodiment in the configuration of the electrolyte 120, and the other configurations are common.

In the second embodiment, the electrolyte 120 includes a hydrogen-electrode neighboring electrolyte 121 that is an example of a first electrolyte, a central electrolyte 122 that is an example of a third electrolyte, and an oxygen-electrode neighboring electrolyte 123 that is an example of a second electrolyte. The electrolyte 120 has a stacked structure in which the hydrogen-electrode neighboring electrolyte 121, the central electrolyte 122, and the oxygen-electrode neighboring electrolyte 123 are stacked in turn.

The hydrogen-electrode neighboring electrolyte 121 is located near the hydrogen electrode 110 and contains a ceria-based material having a fluorite crystal structure. For example, doped ceria in which at least one type of oxide selected from a group consisting of Sm₂O₃, Gd₂O₃, and Y₂O₃ and CeO₂ are contained in the form of a solid solution can be suitably used as the ceria-based material that forms the hydrogen-electrode neighboring electrolyte 121.

The central electrolyte 122 is located between the hydrogen-electrode neighboring electrolyte 121 and the oxygen-electrode neighboring electrolyte 123 and contains a stabilized zirconia-based material. For example, stabilized zirconia in which at least one type of stabilizer selected from a group consisting of Y₂O₃, Sc₂O₃, Yb₂O₃, Gd₂O₃, CaO, MgO, and CeO₂ is contained in the form of a solid solution can be suitably used as the stabilized zirconia-based material that forms the central electrolyte 122.

The oxygen-electrode neighboring electrolyte 123 is located near the oxygen electrode 130 and contains a ceria-based material having a fluorite crystal structure. For example, doped ceria in which at least one type of oxide selected from a group consisting of Sm₂O₃, Gd₂O₃, and Y₂O₃ and CeO₂ are contained in the form of a solid solution can be suitably used as the ceria-based material that forms the oxygen-electrode neighboring electrolyte 123.

The film thickness of each of the hydrogen-electrode neighboring electrolyte 121 and the oxygen-electrode neighboring electrolyte 123 may be equal to or less than 1/2 of the film thickness of the central electrolyte 122. With this configuration, it is possible to prevent a short circuit between the hydrogen electrode 110 and the oxygen electrode 130 caused by the excessively thin central electrolyte 122. The fact that the film thickness of each of the hydrogen-electrode neighboring electrolyte 121 and the oxygen-electrode neighboring electrolyte 123 is equal to or less than 1/2 of the film thickness of the central electrolyte 122 can be understood by analysis of the components of the electrolyte 120.

According to the second embodiment, the electrolyte 120 has a three-layer structure configured by the hydrogen-electrode neighboring electrolyte 121 that contains a ceria-based material having a fluorite crystal structure, the central electrolyte 122 that contains a stabilized zirconia-based material, and the oxygen-electrode neighboring electrolyte 123 that contains a ceria-based material having a fluorite crystal structure, thereby being able to effectively prevent a decrease in the ionic conductivity.

A more detailed configuration and operational effects of the solid oxide electrochemical cell 1 are described below, by way of examples.

### (First example)

The solid oxide electrochemical cell 1 according to a first example was produced by the following method. First, a paste was prepared from powder in which nickel oxide (NiO) and doped ceria (GDC10) in which Gd₂O₃ was doped to have a composition of (Gd₂O₃)_{0.1}(CeO₂)_{0.9} were mixed at a weight ratio of 6:4. The prepared paste was then formed into a sheet, thereby preparing a precursor of a hydrogen-electrode base.

After the precursor of the hydrogen-electrode base was prepared, a mixture of NiO and GDC as a precursor of a hydrogen-electrode active layer, GDC10 as the hydrogen-electrode neighboring electrolyte 121, and yttria-stabilized zirconia as the central electrolyte 122 were formed on the precursor of the hydrogen-electrode base in turn to prepare a laminate.

After the laminate was prepared, the laminate was fired under a temperature condition of 1200°C or higher and 1500°C or lower until sufficient strength was obtained in each layer and between the layers.

After the laminate was fired, GDC10 was formed as the oxygen-electrode neighboring electrolyte 123 on the fired laminate, and was then fired under a temperature condition of 1000°C or higher and 1500°C or lower until sufficient strength was obtained in each layer and between the layers. The oxygen-electrode neighboring electrolyte 123 may be co-fired with the laminate.

Thereafter, as the oxygen electrode 130, La(Sr)Co(Fe)O_{3-δ} (LSCF) was fired at a temperature within a range of 900°C or higher and 1200°C or lower. In this manner, the solid oxide electrochemical cell 1 according to the first example was produced.

The solid oxide electrochemical cell 1 according to the first example produced in this manner was placed in an output-characteristics evaluation device, and dry hydrogen and a mixed gas in which N₂ and O₂ were mixed at a volume ratio of 4:1 were caused to flow to the hydrogen electrode side and the oxygen electrode side, respectively, at 700°C or higher to reduce the precursor of the hydrogen-electrode base and the precursor of the hydrogen-electrode active layer, thereby forming the hydrogen-electrode base and the hydrogen-electrode active layer.

The output-characteristics evaluation device can control the water vapor concentration on the hydrogen electrode side, cause the solid oxide electrochemical cell 1 to operate in an SOFC mode and an SOEC mode, and evaluate the I (current) - V (voltage) characteristics at that time. By using this output-characteristics evaluation device, the reduction described above was performed to form the hydrogen-electrode base and the hydrogen-electrode active layer, and thereafter the solid oxide electrochemical cell 1 was caused to operate as an SOEC at a measurement temperature and was subjected to initial IV characterization.

### (Second example)

The solid oxide electrochemical cell 1 according to a second example was produced by the following method. First, a paste was prepared from powder in which nickel oxide (NiO) and doped ceria (GDC10) in which Gd₂O₃ was doped to have a composition of (Gd₂O₃)_{0.1}(CeO₂)_{0.9} were mixed at a weight ratio of 6:4. The prepared paste was then formed into a sheet, thereby preparing a precursor of a hydrogen-electrode base.

After the precursor of the hydrogen-electrode base was prepared, a mixture of NiO and GDC as a precursor of a hydrogen-electrode active layer, (Gd₂O₃)_{0.2}(CeO₂)_{0.8} (GDC20) as the hydrogen-electrode neighboring electrolyte 121, and yttria-stabilized zirconia as the central electrolyte 122 were formed on the precursor of the hydrogen-electrode base in turn to prepare a laminate.

After the laminate was prepared, the laminate was fired under a temperature condition of 1200°C or higher and 1500°C or lower until sufficient strength was obtained in each layer and between the layers.

After the laminate was fired, GDC20 was formed as the oxygen-electrode neighboring electrolyte 123 on the fired laminate, and was then fired under a temperature condition of 1000°C or higher and 1500°C or lower until sufficient strength was obtained in each layer and between the layers. The oxygen-electrode neighboring electrolyte 123 may be co-fired with the laminate.

Thereafter, as the oxygen electrode 130, La(Sr)Co(Fe)O_{3-δ} (LSCF) was fired at a temperature within a range of 900°C or higher and 1200°C or lower. In this manner, the solid oxide electrochemical cell 1 according to the second example was produced.

The solid oxide electrochemical cell 1 according to the second example produced in this manner was placed in an output-characteristics evaluation device, the precursor of the hydrogen-electrode base and the precursor of the hydrogen-electrode active layer were reduced to form the hydrogen-electrode base and the hydrogen-electrode active layer in an identical manner to that in the first example, and thereafter an IV characterization test in an initial state was performed.

### (Third example)

The solid oxide electrochemical cell 1 according to a third example was produced by the following method. First, a paste was prepared from powder in which nickel oxide (NiO) and doped ceria (GDC10) in which Gd₂O₃ was doped to have a composition of (Gd₂O₃)_{0.1}(CeO₂)_{0.9} were mixed at a weight ratio of 6:4. The prepared paste was then formed into a sheet, thereby preparing a precursor of a hydrogen-electrode base.

After the precursor of the hydrogen-electrode base was prepared, a mixture of NiO and GDC as a precursor of a hydrogen-electrode active layer, (Sm₂O₃)_{0.2}(CeO₂)_{0.8} (SDC20) as the hydrogen-electrode neighboring electrolyte 121, and yttria-stabilized zirconia as the central electrolyte 122 were formed on the precursor of the hydrogen-electrode base in turn to prepare a laminate.

After the laminate was prepared, the laminate was fired under a temperature condition of 1200°C or higher and 1500°C or lower until sufficient strength was obtained in each layer and between the layers.

After the laminate was fired, SDC20 was formed as the oxygen-electrode neighboring electrolyte 123 on the fired laminate, and was then fired under a temperature condition of 1000°C or higher and 1500°C or lower until sufficient strength was obtained in each layer and between the layers. The oxygen-electrode neighboring electrolyte 123 may be co-fired with the laminate.

Thereafter, as the oxygen electrode 130, La(Sr)Co(Fe)O_{3-δ} (LSCF) was fired at a temperature within a range of 900°C or higher and 1200°C or lower. In this manner, the solid oxide electrochemical cell 1 according to the third example was produced.

The solid oxide electrochemical cell 1 according to the third example produced in this manner was placed in an output-characteristics evaluation device, the precursor of the hydrogen-electrode base and the precursor of the hydrogen-electrode active layer were reduced to form the hydrogen-electrode base and the hydrogen-electrode active layer in an identical manner to that in the first example, and thereafter an IV characterization test in an initial state was performed.

### (Fourth example)

The solid oxide electrochemical cell 1 according to a fourth example was produced by the following method. First, a paste was prepared from powder in which nickel oxide (NiO) and doped ceria (GDC10) in which Gd₂O₃ was doped to have a composition of (Gd₂O₃)_{0.1}(CeO₂)_{0.9} were mixed at a weight ratio of 6:4. The prepared paste was then formed into a sheet, thereby preparing a precursor of a hydrogen-electrode base.

After the precursor of the hydrogen-electrode base was prepared, a mixture of NiO and GDC as a precursor of a hydrogen-electrode active layer, (Y₂O₃)_{0.2}(CeO₂)_{0.8}(YDC20) as the hydrogen-electrode neighboring electrolyte 121, and yttria-stabilized zirconia as the central electrolyte 122 were formed on the precursor of the hydrogen-electrode base in turn to prepare a laminate.

After the laminate was prepared, the laminate was fired under a temperature condition of 1200°C or higher and 1500°C or lower until sufficient strength was obtained in each layer and between the layers.

After the laminate was fired, YDC20 was formed as the oxygen-electrode neighboring electrolyte 123 on the fired laminate, and was then fired under a temperature condition of 1000°C or higher and 1500°C or lower until sufficient strength was obtained in each layer and between the layers. The oxygen-electrode neighboring electrolyte 123 may be co-fired with the laminate.

Thereafter, as the oxygen electrode 130, La(Sr)Co(Fe)O_{3-δ} (LSCF) was fired at a temperature within a range of 900°C or higher and 1200°C or lower. In this manner, the solid oxide electrochemical cell 1 according to the fourth example was produced.

The solid oxide electrochemical cell 1 according to the fourth example produced in this manner was placed in an output-characteristics evaluation device, the precursor of the hydrogen-electrode base and the precursor of the hydrogen-electrode active layer were reduced to form the hydrogen-electrode base and the hydrogen-electrode active layer in an identical manner to that in the first example, and thereafter an IV characterization test in an initial state was performed.

### (First comparative example)

The solid oxide electrochemical cell 1 according to a first comparative example was produced by the following method. First, a paste was prepared from powder in which nickel oxide (NiO) and doped ceria (GDC10) in which Gd₂O₃ was doped to have a composition of (Gd₂O₃)_{0.1}(CeO₂)_{0.9} were mixed at a weight ratio of 6:4. The prepared paste was then formed into a sheet, thereby preparing a precursor of a hydrogen-electrode base.

After the precursor of the hydrogen-electrode base was prepared, a mixture of NiO and GDC as a precursor of a hydrogen-electrode active layer and yttria-stabilized zirconia as the electrolyte 120 were formed on the precursor of the hydrogen-electrode base in turn to prepare a laminate.

After the laminate was prepared, the laminate was fired under a temperature condition of 1200°C or higher and 1500°C or lower until sufficient strength was obtained in each layer and between the layers.

After the laminate was fired, GDC10 was formed as a reaction prevention layer on the fired laminate, and was then fired under a temperature condition of 1000°C or higher and 1500°C or lower until sufficient strength was obtained in each layer and between the layers.

Thereafter, as the oxygen electrode 130, La(Sr)Co(Fe)O_{3-δ} (LSCF) was fired at a temperature within a range of 900°C or higher and 1200°C or lower. In this manner, the solid oxide electrochemical cell 1 according to the first comparative example was produced.

The solid oxide electrochemical cell 1 according to the first comparative example produced in this manner was placed in an output-characteristics evaluation device, the precursor of the hydrogen-electrode base and the precursor of the hydrogen-electrode active layer were reduced to form the hydrogen-electrode base and the hydrogen-electrode active layer in an identical manner to that in the first example, and thereafter an IV characterization test in an initial state was performed.

### (Results of initial IV characterization test)

Table 1 represents current densities in an EC (Electrolysis Cell) mode at the same cell voltage for the first to fourth examples and the first comparative example.

**[Table 1]**

| | Hydrogen-electrode neighboring electrolyte | Oxygen-electrode neighboring electrolyte | Current value@ 1.3V /Acm⁻² | Cell resistance /mΩcm² |
|---|---|---|---|---|
| First example | GDC10 | GDC10 | 0.96 | 150 |
| Second example | GDC20 | GDC20 | 0.94 | 160 |
| Third example | SDC20 | SDC20 | 0.91 | 160 |
| Fourth example | YDC20 | YDC20 | 0.83 | 240 |
| First comparative example | --- | --- | 0.59 | 400 |

As is found in Table 1, the results of initial IV characterization in an initial state for the first to third examples are substantially coincident with each other, the effect of a three-layer structure electrolyte is satisfactory, and the performance/activity of an electrochemical cell is reproduced. As for the fourth example, since the ionic conductivity of YDC20 is lower than those of GDC10, GDC20, and SDC20, slight deterioration of the performance is observed. However, a large increase in resistance is not observed, and the effect of the three-layer structure electrolyte is observed. On the other hand, as for the first comparative example, the cell resistance and the overvoltage were large, which are considered as having caused deterioration of the cell performance.

These results demonstrate that a decrease in the ionic conductivity is prevented by an electrolyte containing both a ceria-based material having a fluorite crystal structure and a stabilized zirconia-based material.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An electrochemical cell comprising an electrolyte arranged between a hydrogen electrode and an oxygen electrode, wherein
the electrolyte contains a ceria-based material having a fluorite crystal structure and a stabilized zirconia-based material.

2. The electrochemical cell of Claim 1, wherein the electrolyte includes
a first electrolyte located on a side close to the hydrogen electrode and containing the ceria-based material,
a second electrolyte located on a side close to the oxygen electrode and containing the ceria-based material, and
a third electrolyte located between the first electrolyte and the second electrolyte and containing the stabilized zirconia-based material.

3. The electrochemical cell of Claim 2, wherein a film thickness of each of the first electrolyte and the second electrolyte is equal to or less than 1/2 of a film thickness of the third electrolyte.

4. The electrochemical cell of any one of Claims 1 - 3, wherein
the ceria-based material is doped ceria in which at least one type of oxide selected from Gd, Sm, and Y is doped, and
the zirconia-based material is stabilized zirconia stabilized with at least one type of oxide selected from Y and Sc.

5. The electrochemical cell of any one of Claims 1 - 4, wherein the oxygen electrode contains an ABO₃-type perovskite oxide, an element constituting an A site in the perovskite oxide is at least one type of element selected from La, Ba, Sr, and Ca, and an element constituting a B site is at least one type of element selected from Mn, Co, Fe, and Ni.

6. The electrochemical cell of any one of Claims 1 - 5, wherein the hydrogen electrode contains at least one type of metal selected from a group consisting of nickel, cobalt, iron, and copper.

7. An electrochemical cell stack comprising a plurality of stacked electrochemical cells each including an electrolyte arranged between a hydrogen electrode and an oxygen electrode, wherein
the electrolyte contains a ceria-based material having a fluorite crystal structure and a stabilized zirconia-based material.

8. An electrolyte for an electrochemical cell comprising:
a ceria-based material having a fluorite crystal structure; and
a stabilized zirconia-based material.
